# EUROPÄISCHE PATENTSCHRIFT

(11) **EP 0 945 941 B1**
(45) Veröffentlichungstag und Bekanntmachung des Hinweises auf die Patenterteilung: **02.06.2004**
(21) Anmeldenummer: 99104632.7
(22) Anmeldetag: 09.03.1999
(51) Int. Cl.: H02B 1/30

(54) **Rahmengestell für einen Schaltschrank**
Framework for a switchgear cabinet
Cadre pour armoire de distribution

(30) Priorität: 26.03.1998 DE 19813222
(43) Veröffentlichungstag der Anmeldung: 29.09.1999
(73) Patentinhaber: Rittal-Werk Rudolf Loh GmbH & Co. KG, 35745 Herborn (DE)
(72) Erfinder: Reuter, Wolfgang, 57299 Burbach 5 (DE)
(74) Vertreter: Fleck, Hermann-Josef, Dr.-Ing.

(56) Entgegenhaltungen:
- WO-A-94/19850
- DE-A- 3 542 434
- DE-A- 3 620 094

## Beschreibung

Die Erfindung betrifft ein Rahmengestell für einen Schaltschrank, das aus Rahmenschenkel zusammengesetzt ist, von denen vier horizontal ausgerichtete einen unteren Gestellrahmen bilden, der mit Auflageprofilen für Bodenbleche verbunden ist.

Ein Rahmengestell dieser Art ist aus der DE 33 44 598 C1 bekannt. Dabei werden an dem unteren Gestellrahmen getrennte Auflageprofile angeschraubt, auf denen Bodenbleche aufliegend befestigt werden können, die die offene Unterseite des Rahmengestelles verschließen. Diese Auflageprofile erstrecken sich zumindest über zwei einander gegenüberliegende Rahmenschenkel des unteren Gestellrahmens und sind an diesen befestigt, wobei sie die Anbringungsmöglichkeiten an diesen Rahmenschenkeln in einer Richtung beeinträchtigen. Die Rahmenschenkel tragen in den beiden rechtwinklig zueinander stehenden Befestigungs-Profilseiten, die eine Innenkante des Rahmengestelles bilden, Reihen von System-Befestigungsaufnahmen, die nach dem Anbringen der Auflageprofile zum Teil abgedeckt und daher nicht mehr zugänglich sind.

Es ist Aufgabe der Erfindung, bei einem Rahmengestell der eingangs erwähnten Art Auflageprofile für Bodenbleche so anzubringen, daß die Anbringungsmöglichkeiten an den Rahmenschenkeln des unteren Gestellrahmens nicht beeinträchtigt werden.

Diese Aufgabe wird nach der Erfindung dadurch gelöst, daß die Auflageprofile einen Bodenrahmen bilden, der hochstehende Befestigungslaschen trägt, daß die Rahmenschenkel des unteren Gestellrahmens vertikal ausgerichtete Innenprofilseiten aufweisen, die im Bereich ihrer Unterkanten und der anschließenden Profilseiten mit Ausnehmungen zum Einführen der Befestigungslaschen versehen sind und daß die Befestigungslaschen auf den Innenseiten dieser Innenprofilseiten des unteren Gestellrahmens anliegend festgeschraubt sind.

Der vorgefertigte Bodenrahmen kann auf einfache Art am Rahmengestell angebracht werden, wobei er bei einem Schaltschrank mit Schaltschranksockel einfach zwischen dem Schaltschranksockel und dem unteren Gestellrahmen des Rahmengestelles angeordnet wird. Dabei bleiben die beiden mit Reihen von System-Befestigungsaufnahmen versehenen und eine Innenkante des Rahmengesteiles bildenden Profilseiten der Rahmenschenkel vollständig zugänglich und zum Anbringen von Anbauteilen verwendbar.

Für die Verbindung zwischen Bodenrahmen und Gestellrahmen ist nach einer Ausgestaltung vorgesehen, daß die Befestigungslaschen mit Gewindebohrungen und die Innenprofilseiten der Rahmenschenkel des unteren Gestellrahmens mit darauf ausgerichtete Befestigungsaufnahmen für Befestigungsschrauben versehen sind.

Eine eindeutige Festlegung des Bodenrahmens am Rahmengestell läßt sich dadurch erreichen, daß in jedem Eckbereich des Bodenrahmens zwei Befestigungslaschen vorgesehen sind, die mit den im Eckbereich im rechten Winkel aufeinanderstoßenden, horizontalen Rahmenschenkel des unteren Gestellrahmens verbunden sind, wobei die beiden Befestigungslaschen rechtwinklig zueinander stehen und auf die Innenprofilseiten der zugekehrten Rahmenschenkel ausgerichtet sind.

Der Übergang vom Rahmengestell zum Bodenrahmen ist nach einer Ausgestaltung so ausgeführt, daß der Bodenrahmen einen umlaufenden, hochstehenden Außenrand und einen umlaufenden L-förmigen, zum Außenrand gerichteten Auflagerand aufweist und daß der Bodenrahmen zwischen Außenwand und Auflagerand eine Aufnahme für den unteren Gestellrahmen des Rahmengestelles bildet.

Eine vorteilhafte Ausgestaltung ist dadurch gekennzeichnet, daß der Bodenrahmen aus vier Auflageprofilabschnitten und vier Eckstücken zusammengesetzt ist, wobei die Eckstücke die aufeinanderstoßenden Auflageprofilabschnitte mit die Befestigungslaschen tragenden Ansatzplatten überdecken.

Die Auflageprofilabschnitte werden auf Länge abgeschnitten und mit einheitlichen Eckstücken zum Bodenrahmen der gewünschten Abmessung zusammengesetzt. Dabei ist zudem vorgesehen, daß die Ansatzplatten um die Wandstärke der Auflageprofilabschnitte gegenüber der Basis der Eckstücke in Richtung zum unteren Gestellrahmen hochgesetzt sind und sich von den Befestigungslaschen nur in Richtung zum Auflagerand des Bodenrahmens erstrecken, um die Befestigungslaschen in den Bereich der Enden der horizontal ankommenden Rahmenschenkel zu verlagern.

Damit das Rahmengestell mit dem unteren Gestellrahmen satt in dem Bodenrahmen aufliegt, sieht eine weitere Ausgestaltung vor, daß die Eckstücke mit Außenrandstücken den Außenrand des Bodenrahmens vervollständigen sowie daß die Auflagenprofilabschnitte und die Eckstücke zwischen dem Außenrand und den an den Ansatzplatten abgewinkelten Befestigungslaschen eine einheitlich hohe Auflagefläche für den unteren Gestellrahmen des Rahmengestelles bilden.

Weiterhin kann vorgesehen sein, daß die Befestigungslaschen zumindest um die Wandstärke der Innenprofilseiten der unteren horizontalen Rahmenschenkel an den Ansatzplatten der Eckstücke in Richtung zum Außenrand des Bodenrahmens abgesetzt sind, damit die Ansatzplatten sich nur im Bereich der Befestigungslaschen in den Bereich der Rahmenschenkel erstrecken, um in die Ausnehmungen derselben eingeführt werden zu können.

Damit die Ansatzplatten gegenüber der Basis der Eckstücke leicht nach oben abgesetzt werden können, ist vorgesehen, daß sich die Ansatzplatten mit einem erhöhten Teilbereich in die Basis der Eckstücke hinein erstrecken und in diesem Teilbereich hochgekantet sind.

Für die Befestigung des Bodenrahmens am Schaltschranksockel ist nach einer Ausgestaltung vorgesehen, daß die Basis und der hochgekantete Teilbereich derselben der Eckstücke jeweils mit einer Befestigungsbohrung versehen sind.

Die Erfindung wird anhand eines in den Zeichnungen dargestellten Ausführungsbeispiels näher erläutert. Es zeigen:
- Fig. 1: in perspektivischer Explosionsdarstellung einen mit dem unteren Gestellrahmen eines Rahmengestelles verbindbaren Bodenrahmen für die Auflage und Befestigung von Bodenblechen,
- Fig. 2: eine vergrößerte perspektivische Teilansicht eines Eckbereiches des Rahmengestelles und
- Fig. 3: in vergrößerter perspektivischer Teilansicht den Eckbereich des Bodenrahmens.

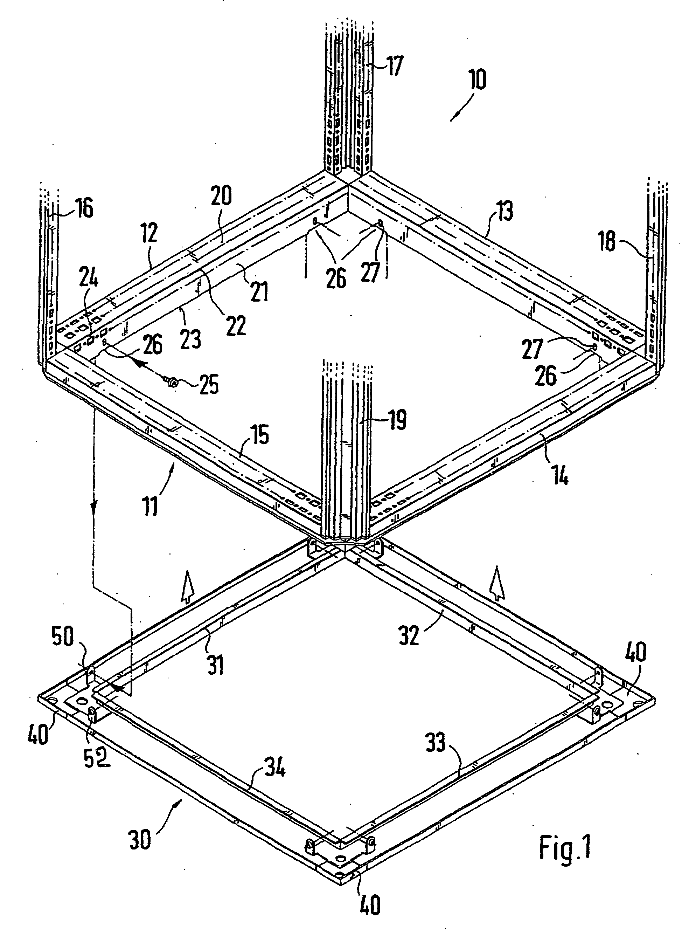

Von dem Rahmengestell 10 eines Schaltschrankes ist in Fig. 1 nur der untere Teil mit dem unteren Gestellrahmen 11 gezeigt, der aus den horizontal ausgerichteten Rahmenschenkeln 12, 13, 14 und 15 gebildet ist. In den Eckbereichen des Gestellrahmens 11 sind die vertikalen Rahmenschenkel 16, 17, 18 und 19 angebracht, deren obere Enden mit einem oberen (nicht dargestellten) Gestellrahmen verbunden sind.

Aus vier Auflageprofilabschnitten 31 bis 34 und vier Eckstücken 40 ist ein Bodenrahmen 30 gebildet, der am unteren Gestellrahmen 11 des Rahmengestelles 10 befestigt wird und dabei zwischen dem (nicht dargestellten) Schaltschranksockel und dem Rahmengestell 10 zum liegen kommt.

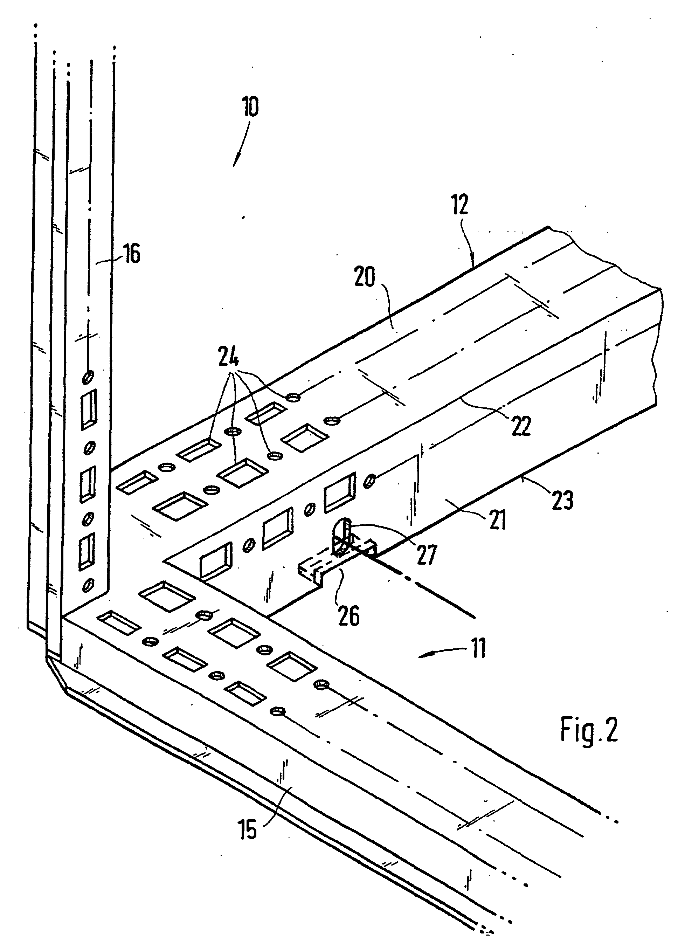

Wie die Fig. 1 und 2 erkennen lassen, bilden die rechtwinklig zueinander stehenden Profilseiten 20 und 21 der Rahmenschenkel 12 bis 15 eine Innenkante 22 des Rahmengestelles 10 und sind mit den Reihen von System-Befestigungsaufnahmen 24 versehen. Die vertikal ausgerichteten Innenseiten 21 tragen im Bereich ihrer Unterkante 23 und der anschließenden (nicht näher bezeichneten) Profilseite eine Ausnehmung 26, die in der Breite auf die Breite von Befestigungslaschen 50 und 52 abgestimmt sind, welche an dem Bodenrahmen 30 nach oben abstehen und in gleicher Verteilung wie die Ausnehmungen 26 angeordnet sind, so daß sie in die Ausnehmungen 26 eingeführt werden können. Die Befestigungslaschen 50 und 52 kommen dabei an der Innenseite der vertikalen Innenprofilseite 21 zur Anlage und können mit diesen verschraubt werden. Dazu sind in die Befestigungslaschen 50 und 52 Gewindebohrungen 51 und 53 eingebracht, die mit Befestigungsaufnahmen 27 in den Innenprofilseiten 21 zur Deckung gebracht sind und die Befestigungsschrauben 25 so aufnehmen können, daß diese in die Gewindebohrungen 51 und 53 einschraubbar sind. Dabei bleiben die Reihen von System-Befestigungsaufnahmen 24 der Profilseiten 20 und 21 der Rahmenschenkel 12 bis 15 frei zugänglich und können zum Anbringen von Anbauelementen ungehindert verwendet werden.

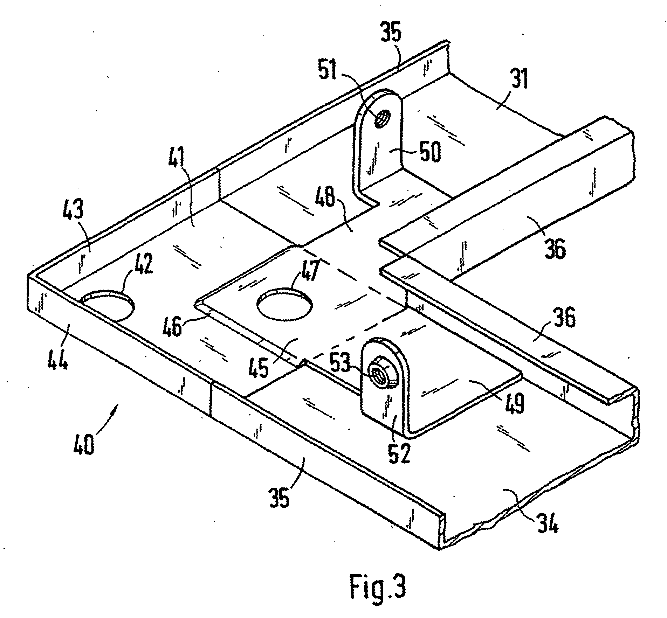

Wie die Fig. 3 zeigt, wird das Eckstück 40, wie die Auflageprofilabschnitte 31 . bis 34, mit abgekanteten Außenrandstücken 43 und 44 versehen, damit der Außenrand 35 der Auflageprofilabschnitte 31 bis 34 vervollständigt ist und sich über den gesamten Umfang des Bodenrahmens 30 erstreckt. Die Basis 41 des Eckstückes 40 ist mit den aufeinanderstoßenden Auflageprofilabschnitten, z.B. 31 und 34, verbunden. Die L-förmigen Auflageränder 36 der Auflageprofilabschnitte 31 bis 34 stoßen direkt aufeinander und bilden einen nach innen versetzten Auflagerahmen für Bodenbleche, der am unteren Gestellrahmen 11 zum Innenraum des Rahmengestelles 10 hin vorsteht. Die Eckstücke 40 überdecken mit Ansatzplatten 48 und 49 die Enden der aufeinanderstoßenden Auflageprofilabschnitte, z.B. 31 und 34. Die Ansatzplatten 48 und 49 sind jedoch um die Wandstärke der Auflageprofilabschnitte 31 bis 34 nach oben abgesetzt, so daß sie auf deren Basis aufliegen und mit dieser verbunden werden können. Diese Ansatzplatten 48 und 49 tragen die Befestigungslaschen 50 und 52 für die Rahmenschenkel 12 und 15 und erstrecken sich von den Befestigungslaschen 50 und 52 nur in Richtung zum Auflagerand 36 der zugekehrten Auflageprofilabschnitte 31 und 34.

Dabei stehen die Befestigungsflansche 50 und 52 an der zugekehrten Kante der Ansatzplatten 48 und 49 um mindestens die Wandstärke der Profilseite 21 der Rahmenschenkel 12 bis 15 ab, so daß die Ansatzplatten 48 und 49 nicht bis zur Profilseite 21 reichen. Die Ansatzplatten 48 und 49 erstrecken sich in einen Teilbereich 45 der Basis 41 des Eckstückes 40 und sind mit diesem Teilbereich 45 nach oben abgesetzt, wie die Abkantung 46 erkennen läßt. Damit ist zwischen dem Außenrand 35 der Auflageprofilabschnitte 31 bis 34 und den Außenrandstücken 43 und 44 der Eckstücke 40 bis zu den zugekehrten Außenseiten der Befestigungslaschen 50 und 52 eine umlaufende Aufnahmeebene für den unteren Gestellrahmen 11 des Rahmengestelles 10 gebildet, so daß dieses satt im Bodenrahmen 30 aufsteht. Die Basis 41 und der erhöhte Teilbereich 45 der Eckstücke 40 sind mit Befestigungsbohrungen 42 und 47 versehen, die zum Verbinden des Bodenrahmens 30 mit dem Schaltschranksockel verwendet werden können.

Die Eckstücke 40 können als Stanz-Biege-Teile einstückig kostengünstig hergestellt und mit den Auflageprofilabschnitten 31 bis 34 verschweißt werden.

## Patentansprüche

1. Rahmengestell (10) für einen Schaltschrank, das aus Rahmenschenkel (12 - 19) zusammengesetzt ist, von denen vier horizontal ausgerichtete (12 - 15), einen unteren Gestellrahmen (11) bilden, der mit Auflageprofilen für Bodenbleche verbunden ist,
**dadurch gekennzeichnet,**
**daß** die Auflageprofile einen Bodenrahmen (30) bilden, der hochstehende Befestigungslaschen (50, 52) trägt, is
**daß** die Rahmenschenkel (12 bis 15) des unteren Gestellrahmens (11) vertikal ausgerichtete Innenprofilseiten (21) aufweisen, die im Bereich ihrer Unterkanten (23) und der anschließenden Profilseiten mit Ausnehmungen (26) zum Einführen der Befestigungslaschen (50, 52) versehen sind und
**daß** die Befestigungslaschen (50, 52) auf den Innenseiten dieser Innenprofilseiten (21) des unteren Gestellrahmens (11) anliegend festgeschraubt sind.

2. Rahmengestell nach Anspruch 1,
**dadurch gekennzeichnet,**
**daß** die Befestigungslaschen (50, 52) mit Gewindebohrungen (51, 53) und die Innenprofilseiten (21) der Rahmenschenkel (12, 13, 14, 15) des unteren Gestellrahmens (11) mit darauf ausgerichtete Befestigungsaufnahmen (27) für Befestigungsschrauben (25) versehen sind.

3. Rahmengestell nach Anspruch 1 oder 2,
**dadurch gekennzeichnet,**
**daß** in jedem Eckbereich des Bodenrahmens (30) zwei Befestigungslaschen (50, 52) vorgesehen sind, die mit den im Eckbereich im rechten Winkel aufeinanderstoßenden, horizontalen Rahmenschenkel (12,13; 13, 14; 14,15; 15, 12) des unteren Gestellrahmens (11) verbunden sind, wobei die beiden Befestigungslaschen (50, 52) rechtwinklig zueinander stehen und auf die Innenprofilseiten (21) der zugekehrten Rahmenschenkel (12,13 bzw. 13,14 bzw. 14,15 bzw. 15,12) ausgerichtet sind.

4. Rahmengestell nach einem der Ansprüche 1 bis 3,
**dadurch gekennzeichnet,**
**daß** der Bodenrahmen (30) auf einem Schaltschranksockel befestigt ist.

5. Rahmengestell nach einem der Ansprüche 1 bis 4,
**dadurch gekennzeichnet,**
**daß** der Bodenrahmen (30) einen umlaufenden, hochstehenden Außenrand (35; 43, 44) und einen umlaufenden L-förmigen, zum Außenrand (35; 43, 44) gerichteten Auflagerand (36) aufweist und
**daß** der Bodenrahmen (30) zwischen Außenwand (35; 43, 44) und Auflagerand (36) eine Aufnahme für den unteren Gestellrahmen (11) des Rahmengestelles (10) bildet.

6. Rahmengestell nach einem der Ansprüche 1 bis 5,
**dadurch gekennzeichnet,**
**daß** der Bodenrahmen (30) aus vier Auflageprofilabschnitten (31 bis 34) und vier Eckstücken (40) zusammengesetzt ist, wobei die Eckstücke (40) die aufeinanderstoßenden Auflageprofilabschnitte (31,32 bzw. 32,33 bzw. 33,34 bzw. 34,31 ) mit die Befestigungslaschen (50, 52) tragenden Ansatzplatten (48, 49) überdecken.

7. Rahmengestell nach Anspruch 6,
**dadurch gekennzeichnet,**
**daß** die Ansatzplatten (48, 49) um die Wandstärke der Auflageprofilabschnitte (31 bis 34) gegenüber der Basis (41) der Eckstücke (40) in Richtung zum unteren Gestellrahmen (11) hochgesetzt sind und sich von den Befestigungslaschen (50, 52) nur in Richtung zum Auflagerand (36) des Bodenrahmens (30) erstrecken.

8. Rahmengestell nach einem der Ansprüche 1 bis 7,
**dadurch gekennzeichnet,**
**daß** die Eckstücke (40) mit Außenrandstücken (43, 44) den Außenrand (35) des Bodenrahmens (30) vervollständigen.

9. Rahmengestell nach einem der Ansprüche 1 bis 8,
**dadurch gekennzeichnet,**
**daß** die Auflagenprofilabschnitte (31 bis 34) und die Eckstücke (40) zwischen dem Außenrand (35, 43, 44) und den an den Ansatzplatten (48, 49) abgewinkelten Befestigungslaschen (50, 52) eine einheitlich hohe Auflagefläche für den unteren Gestellrahmen (11) des Rahmengestelles (10) bilden.

10. Rahmengestell nach einem der Ansprüche 1 bis 9,
**dadurch gekennzeichnet,**
**daß** die Befestigungslaschen (50, 52) zumindest um die Wandstärke der Innenprofilseiten (21) der unteren horizontalen Rahmenschenkel (12, 13, 14, 15) an den Ansatzplatten (48, 49) der Eckstücke (40) in Richtung zum Außenrand (35, 43, 44) des Bodenrahmens (30) abgesetzt sind.

11. Rahmenschenkel nach einem der Ansprüche 1 bis 10,
**dadurch gekennzeichnet,**
**daß** sich die Ansatzplatten (48, 49) mit einem erhöhten Teilbereich (45) in die Basis (41) der Eckstücke (40) hinein erstrecken und in diesem Teilbereich hochgekantet (46) sind.

12. Rahmengestell nach Anspruch 11,
**dadurch gekennzeichnet,**
**daß** die Basis (41) und der hochgekantete Teilbereich (45) derselben der Eckstücke (40) jeweils mit einer Befestigungsbohrung (42 und 47) versehen sind.

## Claims

1. Switch-cabinet framework (10) which is made up of frame legs (12 - 19), of which four horizontally oriented frame legs (12 - 15) form a bottom frame (11), which is connected to bearing profiles for floor panels, **characterized in that** the bearing profiles form a floor frame (30) which bears upright fastening lugs (50, 52), **in that** the frame legs (12 to 15) of the bottom frame (11) have vertically oriented inner profile sides (21) which, in the region of their bottom edges (23) and of the adjoining profile sides, are provided with recesses (26) for the introduction of the fastening lugs (50, 52), and **in that** the fastening lugs (50, 52) are screwed in abutment against the insides of the these inner profile sides (21) of the bottom frame (11).

2. Framework according to Claim 1, **characterized in that** the fastening lugs (50, 52) are provided with threaded bores (51, 53) and the inner profile sides (21) of the frame legs (12, 13, 14, 15) of the bottom frame (11) are provided with fastening mounts (27) which are aligned with said bores and are intended for fastening screws (25).

3. Framework according to Claim 1 or 2, **characterized in that** provided in each corner region of the floor frame (30) are two fastening lugs (50, 52), which are connected to the horizontal frame legs (12, 13; 13, 14; 14, 15; 15, 12) of the bottom frame (11), said frame legs or butting against one another at right angles in the corner region, it being the case that the two fastening lugs (50, 52) are located at right angles to one another and are aligned with the inner profile sides (21) of the facing frame legs (12, 13 or 13, 14 or 14, 15 or 15, 12).

4. Framework according to one of Claims 1 to 3, **characterized in that** the floor frame (30) is fastened on the switch-cabinet base.

5. Framework according to one of Claims 1 to 4, **characterized in that** the floor frame (30) has a peripheral, upright outer border (35; 43, 44) and a peripheral L-shaped bearing border (36) directed towards the outer border (35; 43, 44), and **in that** the floor frame (30), between the outer wall (35; 43, 44) and bearing border (36), forms a mount for the bottom frame (11) of the framework (10).

6. Framework according to one of Claims 1 to 5, **characterized in that** the floor frame (30) is made up of four bearing-profile sections (31 to 34) and four corner components (40), the corner components (40) overlapping the abutting bearing-profile sections (31, 32 or 32, 33 or 33, 34 or 34, 31) with extension plates (48, 49), which bear the fastening lugs (50, 52).

7. Framework according to Claim 6, **characterized in that** the extension plates (48, 49) are raised in the direction of the bottom frame (11), in relation to the bottom (41) of the corner components (40), by the wall thickness of the bearing-profile sections (31 to 34) and extend from the fastening lugs (50, 52) only in the direction of the bearing border (36) of the floor frame (30).

8. Framework according to one of Claims 1 to 7, **characterized in that** the corner components (40) complete the outer border (35) of the floor frame (30) with outer-border components (43, 44).

9. Framework according to one of Claims 1 to 8, **characterized in that**, between the outer border (35, 43, 44) and the fastening lugs (50,52), which are angled on the extension plates (48, 49), the bearing-profile sections (31 to 34) form a uniformly high bearing surface for the bottom frame (11) of the framework (10).

10. Framework according to one of Claims 1 to 9, **characterized in that** the fastening lugs (50, 52) are offset in the direction of the outer border (35, 43, 44) of the floor frame (30), on the extension plates (48, 49) of the corner components (40), at least by the wall thickness of the inner profile sides (21) of the bottom horizontal frame legs (12, 13, 14, 15).

11. Framework according to one of Claims 1 to 10, **characterized in that** the extension plates (48, 49) extend into the bottom (41) of the corner components (40) by way of a raised sub-region (45) and are angled in an upright manner (46) in this sub-region.

12. Framework according to Claim 11, **characterized in that** the bottom (41) and the angled sub-region (45) of the corner components (40) are each provided with a fastening bore (42 and 47).

## Revendications

1. Cadre (10) pour une armoire de distribution, qui est composé d'éléments de cadre (12-19), dont quatre éléments orientés horizontalement (12-15) forment un châssis inférieur (11), qui est assemblé à des profilés de pose pour des tôles de fond, **caractérisé en ce que** les profilés de pose forment un cadre de fond (30) qui porte des pattes de fixation dressées (50, 52), **en ce que** les éléments de cadre (12 à 15) du châssis inférieur (11) présentent des côtés intérieurs de profilés (21) orientés verticalement, qui sont pourvus, dans la région de leurs arêtes inférieures (23) et des côtés de profilés adjacents, de logements (26) permettant d'introduire les pattes de fixation (50, 52), et **en ce que** les pattes de fixation (50, 52) sont serrées par vissage en étant appliquées sur les faces intérieures de ces côtés intérieurs de profilés (21) du châssis inférieur (11).

2. Cadre selon la revendication 1, **caractérisé en ce que** les pattes de fixation (50, 52) sont pourvues de trous filetés (51, 53) et **en ce que** les côtés intérieurs de profilés (21) des éléments de cadre (12, 13, 14, 15) du châssis inférieur (11) sont pourvus de logements de fixation (27) alignés avec ceux-ci pour des vis de fixation (25).

3. Cadre selon la revendication 1 ou 2, **caractérisé en ce qu'**il est prévu, dans chaque région de coin du cadre de fond (30), deux pattes de fixation (50, 52) qui sont assemblées aux éléments de cadre horizontaux (12, 13; 13, 14; 14, 15; 15, 12) du châssis inférieur (11), qui se joignent à angle droit dans la région de coin, les deux pattes de fixation (50, 52) étant perpendiculaires l'une à l'autre et étant alignées sur les côtés intérieurs de profilés (21) des éléments de cadre adjacents (12, 13 respectivement 13, 14 respectivement 14, 15 respectivement 15, 12).

4. Cadre selon l'une quelconque des revendications 1 à 3, **caractérisé en ce que** le cadre de fond (30) est fixé sur un socle d'une armoire de distribution.

5. Cadre selon l'une quelconque des revendications 1 à 4, **caractérisé en ce que** le cadre de fond (30) présente un bord extérieur périphérique saillant (35; 43, 44) et un bord de pose périphérique en forme de L (36), orienté vers le bord extérieur (35; 43, 44) et **en ce que** le cadre de fond (30) forme, entre la paroi extérieure (35; 43, 44) et le bord de pose (36), un logement pour le châssis inférieur (11) du cadre (10).

6. Cadre selon l'une quelconque des revendications 1 à 5, **caractérisé en ce que** le cadre de fond (30) est composé de quatre tronçons de profilé de pose (31 à 34) et de quatre pièces de coin (40), les pièces de coin (40) recouvrant les tronçons de profilé de pose jointifs l'un à l'autre (31, 32 respectivement 32, 33 respectivement 33, 34 respectivement 34, 31) avec des plaques de montage (48, 49) portant les pattes de fixation (50, 52).

7. Cadre selon la revendication 6, **caractérisé en ce que** les plaques de montage (48, 49) sont surélevées de l'épaisseur de la paroi des tronçons de profilé de pose (31 à 34) par rapport à la base (41) des pièces de coin (40) en direction du châssis inférieur (11) et s'étendent à partir des pattes de fixation (50, 52) uniquement en direction du bord de pose (36) du cadre de fond (30).

8. Cadre selon l'une quelconque des revendications 1 à 7, **caractérisé en ce que** les pièces de coin (40) complètent avec des portions de bord extérieur (43, 44) le bord extérieur (35) du cadre de fond (30).

9. Cadre selon l'une quelconque des revendications 1 à 8, **caractérisé en ce que** les tronçons de profilé de pose (31 à 34) et les pièces de coin (40) forment, entre le bord extérieur (35, 43, 44) et les pattes de fixation (50, 52) coudées sur les plaques de montage (48, 49), une surface de pose de hauteur unique pour le châssis inférieur (11) du cadre (10).

10. Cadre selon l'une quelconque des revendications 1 à 9, **caractérisé en ce que** les pattes de fixation (50, 52) sont décalées d'au moins l'épaisseur de paroi des côtés intérieurs de profilés (21) des éléments de cadre horizontaux inférieurs (12, 13, 14, 15) sur les plaques de montage (48, 49) des pièces de coin (40) en direction du bord extérieur (35, 43, 44) du cadre de fond (30).

11. Cadre selon l'une quelconque des revendications 1 à 10, **caractérisé en ce que** les plaques de montage (48, 49) s'étendent avec une région partielle surélevée (45) dans la base (41) des pièces de coin (40) et sont chanfreinées vers le haut (46) dans cette région partielle.

12. Cadre selon la revendication 11, **caractérisé en ce que** la base (41) et la région partielle chanfreinée vers le haut (45) de la même des pièces de coin (40) sont chacune pourvues d'un trou de fixation (42 et 47).
